# EUROPÄISCHE PATENTSCHRIFT

(11) **EP 0 677 661 B1**
(45) Veröffentlichungstag und Bekanntmachung des Hinweises auf die Patenterteilung: **02.09.1998**
(21) Anmeldenummer: 94118643.9
(22) Anmeldetag: 26.11.1994
(51) Int. Cl.: F04D 29/16, F16J 15/16, F04D 5/00, F04D 29/18

(54) **Zentrifugalpumpe**
Centrifugal Pump
Pompe centrifuge

(30) Priorität: 15.04.1994 DE 4412934
(43) Veröffentlichungstag der Anmeldung: 18.10.1995
(73) Patentinhaber: ITT Richter Chemie-Technik GmbH, D-47906 Kempen (DE)
(72) Erfinder: Dappen, Hans-Joachim, D-47906 Kempen (DE)
(74) Vertreter: COHAUSZ HANNIG DAWIDOWICZ & PARTNER

(56) Entgegenhaltungen:
- FR-A- 2 185 155
- GB-A- N27 255
- US-A- 1 715 944
- US-A- 2 245 094
- US-A- 3 203 353
- SOVIET INVENTIONS ILLUSTRATED Section PQ, Week 8834 5.Oktober 1988 Derwent Publications Ltd., London, GB; Class Q56, AN 88-240894 & SU-A-1 370 316 (KUTYNSKII YA M) , 30.Januar 1988
- PATENT ABSTRACTS OF JAPAN vol. 009 no. 268 (M-424) ,25.Oktober 1985 & JP-A-60 113089 (MATSUSHITA DENKI SANGYO KK) 19.Juni 1985,

## Beschreibung

Die Erfindung betrifft eine Zentrifugalpumpe, insbesondere Kreiselpumpe, Peripheralpumpe oder Seitenkanalpumpe mit einem Laufrad in einer Pumpenkammer, deren zwei Seitenwände nahe den zwei Seitenflächen des Laufrades sind. Eine solche Pumpe ist aus FR-A-2 185 155 bekannt.

Peripheral und Seitenkanalpumpen u.ä. benötigen eine sorgfältige Abdichtung des Arbeitskanals zur Laufradnabe, um eine Spaltstromleckage vom Bereich hohen Druckes über die Laufradnabe zum Bereich geringen Druckes zu verhindern.

Bei bekannten Pumpen werden hierfür ein glatter axialer Dichtspalt oder federbelastete Dichtringe eingesetzt. Der glatte axiale Dichtspalt ist bei Temperaturänderungen und bei feststoffhaltigen Medien problematisch.

Die federbelasteten Dichtringe müssen, um gegen die maximale Druckdifferenz, die nur im Bereich des Druckstutzens ansteht, zuverlässig abzudichten, mit großer axialer Anpreßkraft ausgeführt werden. Dies bedeutet für den restlichen Umfangsbereich, wo gegen eine geringere Druckdifferenz abzudichten ist, eine deutliche Überdimensionierung der axialen Anpreßkraft.

Eine derartige Abdichtung mit federbelasteten Dichtringen ist z.B. aus der FR-A-2 185 155 bekannt. In diesem Dokument werden verschiedene Methoden offenbart, um bei einer Pumpe der o.g. Arten die Auslaßseite von der Ansaugseite zu trennen. Hierzu wird durch einen konstanten Federdruck entweder eine Dichtung von der Pumpenseitenwand auf die Seitenwand des Laufrades oder umgekehrt gedrückt.

Aus der US-A 1 715 944 ist überdies eine Methode zur Dichtung zwischen Pumpengehäuse und Läuferrad bekannt, bei der in Nute, die extra in die Seitenflächen des Laufrades oder des Pumpengehäuses eingebracht wurden, Gummidichtringe eingesetzt wurden, die sich unter Druckeinwirkung senkrecht zur Drehachse des Laufrades verformen und dadurch dichten.

In der US-A 3 203 353 wird eine Möglichkeit zur Dichtung offenbart, bei der im Raum zwischen der Seitenfläche des Laufrades und der gegenüberliegenden Seitenfläche des Pumpengehäuses eine zu diesen Flächen parallele Dichtscheibe eingeführt wird, die drehbar und verscheiblich auf der Nabe des Laufrades sitzt. Diese Scheibe wird duch die anliegende Druckdifferenz gegen die Seitenfläche des Pumpengehäuses gedrückt und trennt so in dichtender Weise die Saugseite der Pumpe von der Auslaßseite.

In dem Dokument SOVIET INVENTIONS ILLUSTRATED, Section PQ, Week 8834 ist eine Dichtung vorgestellt worden, bei der in tangentiale Nute auf der Seitenfläche des Laufrades ein elastischer Schlauch eingesetzt ist, der mit einer Flüssigkeit gefüllt ist, die eine größere Dichte aufweist als das zu fördende Medium. Dieser elastische Schlauch dient als Dichtung zwischen Laufrad und Pumpenghäuse.

Aufgabe der Erfindung ist es, eine Pumpe der eingangs genannten Art so zu verbessern, daß bei einfacher Konstruktion und hoher Verschleißfestigkeit eine hohe Abdichtung erreicht wird.

Diese Aufgabe wird erfindungsgemäß dadurch erreicht, daß an zumindest einer Seitenfläche des Laufrades eine ringförmige axial bewegliche Dichtlippe vorstehend angeformt ist, die an einem Bereich der benachbarten Seitenwand der Pumpenkammer anliegt und auf ihrer Rückseite durch den Druck des Fördermediums beaufschlagt ist.

Vorteilhafte Ausgestaltungen der Erfindung sind in den Unteransprüchen aufgeführt.

Ein Ausführungsbeispiel der Erfindung ist in den Zeichnungen dargestellt und wird im folgenden näher beschrieben. Es zeigen:
Figur 1: Einen axialen Schnitt durch die Pumpe.
Figur 2: Einen Ausschnitt aus Figur 1.
Figur 3: Einen Ausschnitt aus Figur 2 und
Figur 4: einen Querschnitt durch die Pumpe.

Das Laufrad 4 einer Kreiselmotorpumpe mit Seitenkanal B ist von einem nicht dargestellten Elektromotor über eine Magnetkupplung angetrieben, die einen (Spalt-) Topf 7 aufweist, an dessen Außenseite vom Motor angetriebene Magnete 8 umlaufen, die im Innern des Spalttopfes angeordnete Magnete 9 mitnehmen, die an einer Verlängerung des Laufrades 4 befestigt sind. Der Seitenkanal B erstreckt sich im Pumpengehäuse 1 von dem Saugstutzen A aus 270 Grad um das Laufrad 4 herum bis zum Saugstutzen C.

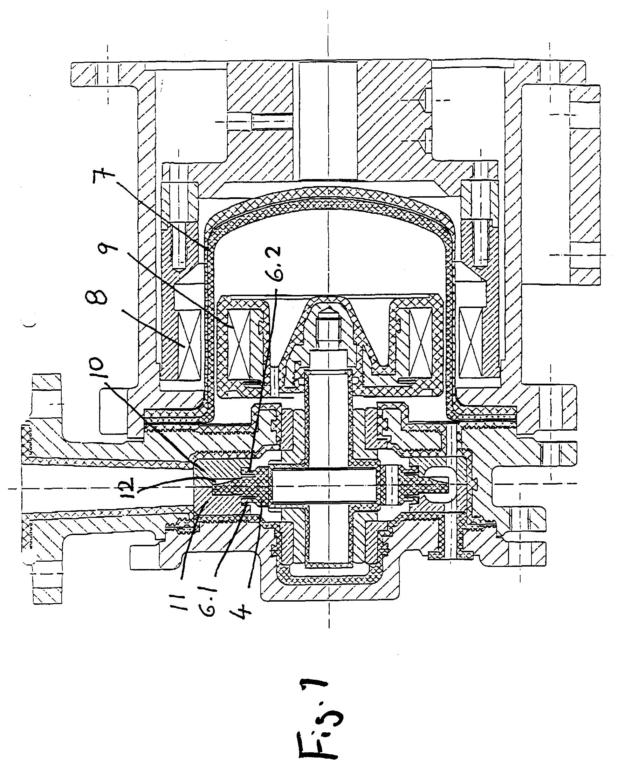

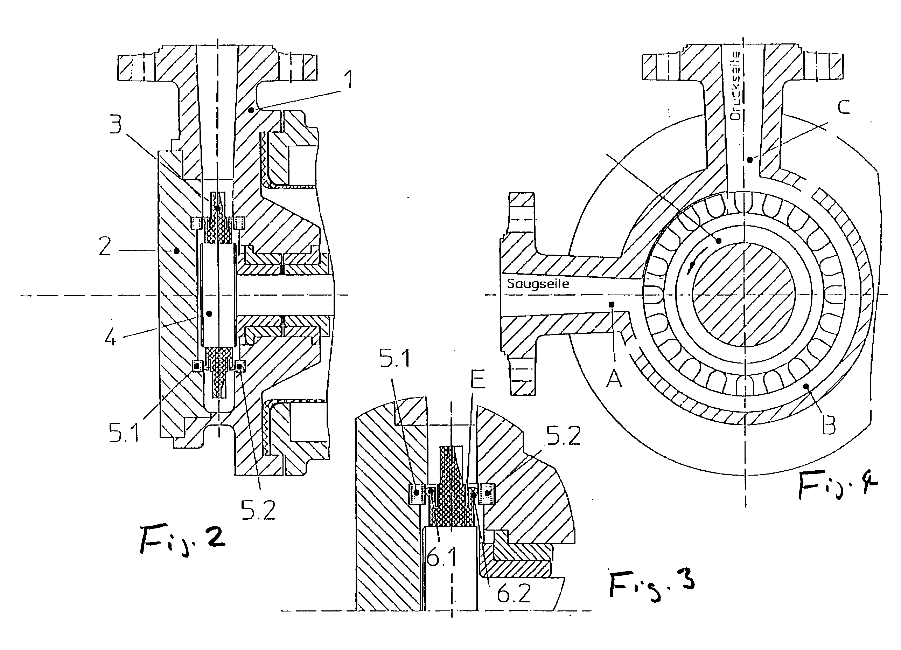

Wie Figur 2 zeigt, befinden sich zu beiden Seiten des Laufrades in der Pumpenkammerwand eingelassene koaxiale Dichtringe 5.1 und 5.2. Die Dichtringe 5.1 und 5.2 sind nicht axial beweglich und federbelastet, sondern starr eingebaut.

An beiden Seiten des Laufrades 4 sind ringförmige Zungen bzw. Dichtlippen 6.1, 6.2 koaxial angeformt, deren freies Ende (Rand) auswärts gerichtet ist und an der jeweiligen Kammerwand bzw. an einem Dichtring 5.1, 5.2 anliegt. Hierbei endet der äußere ringförmige Bereich bzw. das äußere Dichtlippenende noch vor der Peripherie (äußeren Umfang) des Laufrades, insbesondere noch vor dem Fuß der Laufradschaufeln.

Am Laufrad 4 werden die Dichtlippen 6.1 und 6.2 direkt integriert. Hierbei können die Dichtlippen 6.1, 6.2 und insbesondere zumindest der äußere Bereich des Laufrades 4 aus Kunststoff oder Metall bestehen. Der radiale Einstich E zwischen Lippe und Laufrad ermöglicht einen gewissen axialen Federweg der Dichtlippen 6.1 und 6.2. Das Laufrad kann ohne Übermaß, also ohne Vorspannung der Dichtung eingebaut werden. Während des Pumpenbetriebs wird der Spalt E mit dem Pumpendruck beaufschlagt und die Dichtlippen 6.1 und 6.2 an die Dichtringe 5.1 und 5.2 gedrückt. Die hierbei wirkende Anpreßkraft ist nicht wie bei den federbelasteten Dichtringen konstant, sondern vom jeweiligem Betriebspunkt und von der örtlichen Position auf dem Umfang abhängig.

Die axiale Anpreßkraft paßt sich somit dynamisch den vom Betriebspunkt und von der örtlichen Position auf dem Umfang abhängigen Differenzdrücken an. Die axiale Anpreßkraft ist immer nur so groß wie erforderlich, um gegen die momentane Druckdifferenz abzudichten. Diese dynamische Anpassung der axialen Anpreßkraft reduziert die Reibleistung und den Verschleiß innerhalb der Pumpe.

Im Ausführungsbeispiel nach Figur 1 sind statt der Dichtringe 5.1, 5.2 zwei Seitenwände der Pumpenkammer, die zumindest in Höhe des peripheren Bereichs des Laufrades 4 liegen, von zwei ringförmigen Halbschalen 10, 11 gebildet, die einen inneren Ringkanal 12 bilden, in dem zumindest der periphere Bereich des Laufrades 4 einliegt.

## Patentansprüche

1. Zentrifugalpumpe, insbesondere Kreiselpumpe, Peripheralpumpe oder Seitenkanalpumpe mit einem Laufrad (4) in einer Pumpenkammer, deren zwei Seitenwände nahe den zwei Seitenflächen des Laufrades sind, **dadurch gekennzeichnet**, daß an zumindest einer Seitenfläche des Laufrades (4) eine ringförmige axial bewegliche Dichtlippe (6.1, 6.2) vorstehend angeformt ist, die an einem Bereich der benachbarten Seitenwand der Pumpenkammer anliegt und auf ihrer Rückseite durch den Druck des Fördermediums beaufschlagt ist.

2. Zentrifugalpumpe nach Anspruch 1, **dadurch gekennzeichnet**, daß der Bereich der Seitenwand der Pumpenkammer von einem Dichtring (5.1, 5.2) gebildet ist, der in oder an der Seitenwand gelagert ist.

3. Zentrifugalpumpe nach Anspruch 1 oder 2, **dadurch gekennzeichnet**, daß an beiden Seitenflächen des Laufrades (4) je eine ringförmige Dichtlippe (6.1, 6.2) vorstehend angeformt ist.

4. Zentrifugalpumpe nach einem der vorherigen Ansprüche, **dadurch gekennzeichnet**, daß die flexible Dichtlippe (6.1, 6.2) im Querschnitt zungenförmig ist.

5. Zentrifugalpumpe nach einem der vorherigen Ansprüche, **dadurch gekennzeichnet**, daß die Dichtlippen (6.1, 6.2) an dem Laufrad (4) zwischen den Schaufeln und der Nabe angeformt sind.

6. Zentrifugalpumpe nach einem der vorherigen Ansprüche, **dadurch gekennzeichnet**, daß die Dichtlippen (6.1, 6.2) und insbesondere zumindest der äußere Bereich des Laufrades (4) aus Kunststoff oder Metall besteht.

7. Zentrifugalpumpe nach einem der vorhergehenden Ansprüche, **dadurch gekennzeichnet,** daß die zwei Seitenwände der Pumpenkammer, die zumindest in Höhe des peripheren Bereichs des Laufrades (4) liegen, von zwei ringförmigen Halbschalen (10, 11) gebildet sind, die einen inneren Ringkanal (12) bilden, in dem zumindest der periphere Bereich des Laufrades (4) einliegt.

8. Zentrifugalpumpe nach einem der vorherigen Ansprüche, **dadurch gekennzeichnet** , daß die Kammerseitenwände, insbesondere die Halbschalen aus Keramik sind.

## Claims

1. A centrifugal pump, more particularly a rotatory pump, a peripheral pump or a side-channel pump having an impeller (4) in a pump chamber whose two side walls are adjacent the two side faces of the impeller, characterised in that on at least one side face of the impeller (4), an annular, axially movable sealing lip (6.1, 6.2) is formed projecting which bears against a zone of the adjacent side wall of the pump chamber and whose rear side is acted upon by the pressure of the pumping medium.

2. A centrifugal pump according to claim 1, characterised in that the zone of the pump chamber side wall is formed by a sealing ring (5.1, 5.2) which is mounted in or on the side wall.

3. A centrifugal pump according to claims 1 or 2, characterised in that an annular sealing lip (6.1, 6.2) is formed projecting on both side faces of the impeller (4).

4. A centrifugal pump according to one of the preceding claims, characterised in that the flexible sealing lip (6.1, 6.2) is tongue-shaped in cross-section.

5. A centrifugal pump according to one of the preceding claims, characterised in that the sealing lips (6.1, 6.2) are formed on the impeller (4) between the blades and the hub.

6. A centrifugal pump according to one of the preceding claims, characterised in that the sealing lips (6.1, 6.2) and more particularly at least the outer zone of the impeller (4) are made of plastics or metal.

7. A centrifugal pump according to one of the preceding claims, characterised in that the two side walls of the pump chamber, which are situated at least at the height of the peripheral zone of the impeller (4), are formed by two annular half shells (10, 11) forming an inner annular channel (12) in which at least the peripheral zone of the impeller (4) is received.

8. A centrifugal pump according to one of the preceding claims, characterised in that the chamber side walls, more particularly the half shells, are made from ceramics.

## Revendications

1. Pompe centrifuge, en particulier pompe rotative, pompe tourbillonnaire ou pompe régénérative, avec une roue mobile (4) dans une chambre de pompe dont deux parois latérales sont proches des deux faces latérales de la roue mobile,
caractérisée en ce qu'une lèvre d'étanchéité (6.1, 6.2) annulaire mobile axialement est conformée en saillie d'au moins une face latérale de la roue mobile (4), est en appui sur une zone de la paroi latérale adjacente de la chambre de pompe et est soumise à la pression du liquide refoulé sur sa face arrière.

2. Pompe centrifuge selon la revendication 1,
caractérisée en ce que la zone de la paroi latérale de la chambre de pompe est formée par une bague d'étanchéité (5.1, 5.2) qui est montée dans ou sur la paroi latérale.

3. Pompe centrifuge selon la revendication 1 ou 2,
caractérisée en ce qu'une lèvre d'étanchéité (6.1, 6.2) annulaire est conformée en saillie respectivement des deux faces latérales de la roue mobile (4).

4. Pompe centrifuge selon l'une des revendications précédentes,
caractérisée en ce que la lèvre d'étanchéité (6.1, 6.2) flexible a une section transversale en forme de languette.

5. Pompe centrifuge selon l'une des revendications précédentes,
caractérisée en ce que les lèvres d'étanchéité (6.1, 6.2) sont conformées sur la roue mobile (4) entre les ailettes et le moyeu.

6. Pompe centrifuge selon l'une des revendications précédentes,
caractérisée en ce que les lèvres d'étanchéité (6.1, 6.2) et en particulier au moins la zone extérieure de la roue mobile (4) sont constituées de matière synthétique ou de métal.

7. Pompe centrifuge selon l'une des revendications précédentes,
caractérisée en ce que les deux parois latérales de la chambre de pompe qui se trouvent au moins à hauteur de la zone périphérique de la roue mobile (4) sont formées par deux demi-coquilles (10, 11) annulaires, qui forment un canal annulaire interne (12) dans lequel est logée au moins la zone périphérique de la roue mobile (4).

8. Pompe centrifuge selon l'une des revendications précédentes,
caractérisée en ce que les parois latérales de la chambre, en particulier les demi-coquilles, sont en céramique.
